# EUROPEAN PATENT APPLICATION

(11) **EP 1 271 822 A2**
(43) Date of publication of application: **02.01.2003**
(21) Application number: 02077314.9
(22) Date of filing: 11.06.2002
(51) Int. Cl.: H04J 3/14, H04J 3/06

(54) **Failure determination in an optical communication network**

(30) Priority: 18.06.2001 IL 14381501
(71) Applicant: Lightscape Networks Ltd., Petach Tikva 49517 (IL)
(72) Inventor: Sommer, Ronen, Givatayim 53257 (IL); Kaspit, Idan, Rosh Ha'Ayin 48580 (IL)
(74) Representative: Curell Aguilà, Mireia

(57) **Abstract**

An apparatus adapted to be associated with a synchronous communication equipment and to determine the occurrence of a failure in an optical transport network (OTN), comprises a failure indication detector and a correlating unit. The failure indication detector is operative to detect a failure indication pattern generated in response to a failure occurring in the OTN. The correlating unit adapted to be operatively associated with the failure indication detector and the synchronous communication equipment, and to suppress a Loss-of-Frame (LOF) alarm in the synchronous communication equipment in response to receiving an indication that the failure indication pattern has been detected at the failure indication detector and a LOF defect (dLOF) indication has been received from the synchronous communication equipment.

## Description

### FIELD OF THE INVENTION

The present invention relates generally to optical communication networks and more particularly to optical communication networks that employ synchronous communication equipment that supports synchronous communication.

### BACKGROUND OF THE INVENTION

Today, optical communication networks may each employ tens and even hundreds of optical channels for serving synchronous and asynchronous sub-networks, such as sub-networks based on the Synchronous Optical Network (SONET) and sub-networks based on the Synchronous Digital Hierarchy (SDH).

However, the complexity of such optical communication networks increases as the number of optical channels supported thereby increases. For example, a failure generated in an optical transport network of an optical communication network may erroneously be interpreted by management equipment of synchronous sub-networks served by the optical transport network, for example, as a Loss-of-Frame (LOF) alarm in one or more of the synchronous sub-networks. A large number of such interpretations may complicate the management of the synchronous sub-networks as well as their maintenance.

Thus, mechanisms that separate failures that occur in an optical transport network from failures that occur in synchronous communication equipment operated in synchronous sub-networks that are served by the optical transport network may be highly desired.

Some aspects of technologies that may be useful in understanding the present invention are described in the following publications:
The Communications Handbook, CRC Press & IEEE Press, 1997, Editor-in-Chief Jerry D. Gibson, Chapter 39, pp. 542 - 553 and Chapter 40 pp. 554 - 564; and
European patent EP 926852 which describes a method for transmitting an alarm signal for the protection of connections in mixed synchronous (SDH) and plesiochronous (PDH) networks based on a client signal failure (CSF) arrangement which transfers alarm indications from the PDH client transport layer to the SDH server transport layer, in order to allow to carry out the complete protection for connections in networks and sub-networks SNC-P within said mixed networks.

The disclosures of all references mentioned above and throughout the present specification are hereby incorporated herein by reference.

### SUMMARY OF THE INVENTION

The present invention seeks to provide a method and apparatus that enable differentiation between failures that occur in an optical transport network and failures that occur in synchronous communication equipment associated with the optical transport network.

Further objects and features of the invention will become apparent to those skilled in the art from the following description and the accompanying drawings.

There is thus provided in accordance with a preferred embodiment of the present invention an apparatus for determining occurrence of a failure in an optical transport network (OTN) associated with synchronous communication equipment, the apparatus comprising:
a failure indication detector operative to detect a failure indication pattern generated in response to a failure occurring in the OTN; and
a correlating unit operatively associated with said failure indication detector and said synchronous communication equipment, and operative to suppress a Loss-of-Frame (LOF) alarm in said synchronous communication equipment in response to receiving an indication that said failure indication pattern has been detected from the failure indication detector and a LOF defect (dLOF) indication from said synchronous communication equipment.

According to a preferred embodiment of the invention, the correlating unit is comprised in the synchronous communication equipment, and according to another preferred embodiment, the failure indication detector is comprised in the synchronous communication equipment.

The synchronous communication equipment preferably comprises an aligner, so that the correlating unit is adapted to receive the dLOF indication from the aligner. Preferably, the aligner is operative to generate said dLOF indication in response to an incorrect synchronous frame alignment signal (FAS). More preferably, the incorrect synchronous FAS is declared when the aligner does not detect a valid synchronous FAS within a predetermined time period.

According to another preferred embodiment of the invention, the correlating unit is operative to provide to an element management system (EMS) associated with the synchronous communication equipment a failure determination indication, where the failure determination indication being used by the EMS to suppress the LOF alarm in the synchronous communication equipment. Preferably, the indication of detection of said failure indication pattern comprises the failure indication pattern. More preferably, the failure indication pattern comprises a PN-11 sequence (that can also be referred to as generic AIS).

According to yet another preferred embodiment of the present invention, the failure indication pattern is generated in a failure indication generator comprised in the OTN, and said failure indication detector is adapted to receive said failure indication pattern from said failure indication generator. By another embodiment of the present invention there is provided a synchronous communication equipment comprising:
a failure indication detector operative to detect a failure indication pattern generated in response to a failure occurring in the OTN;
an aligner operative to generate a Loss-of-Frame defect (dLOF) indication in response to said failure occurring in the OTN; and
a correlating unit operatively associated with said failure indication detector and said aligner, and operative to suppress a Loss-of-Frame (LOF) alarm in the synchronous communication equipment in response to receiving an indication that said failure indication pattern has been detected from the failure indication detector and the dLOF indication from the aligner.

Preferably, the synchronous communication equipment also comprises an element management system (EMS) operatively associated with the correlating unit and operative to receive from the correlating unit a failure determination indication in response to reception at the correlating unit of the indication of detection of the failure indication pattern and said dLOF indication, and to employ the failure determination indication to suppress the LOF alarm in the synchronous communication equipment.

By another aspect of the invention there is provided an optical communication network comprising:
an optical transport network (OTN) comprising an OTN element in which a failure indication generator is operative to generate a failure indication pattern in response to a failure occurring in the OTN; and
synchronous communication equipment operatively associated with said OTN element, the synchronous communication equipment comprising:
   a failure indication detector operative to detect the failure indication pattern; and
   a correlating unit operatively associated with the failure indication detector and operative to suppress a Loss-of-Frame (LOF) alarm in the synchronous communication equipment in response to receiving an indication that the failure indication pattern has been detected from the failure indication detector and a LOF defect (dLOF) indication from the synchronous communication equipment.

Such synchronous communication equipment is adapted to operate in accordance with at least one of the following technologies: Synchronous Optical Network (SONET); and Synchronous Digital Hierarchy (SDH).

In accordance with yet another embodiment of the invention, there is provided a method for determining a failure in an optical transport network (OTN) associated with synchronous communication equipment and comprising:
detecting a failure indication pattern which is generated in response to a failure occurring in the OTN;
providing an indication of detection of the failure indication pattern and a Loss-of-Frame defect (dLOF) indication; and
suppressing a LOF alarm in the synchronous communication equipment in response to the providing.

### BRIEF DESCRIPTION OF THE DRAWINGS

The present invention will be understood and appreciated more fully from the following detailed description, taken in conjunction with the drawings in which:

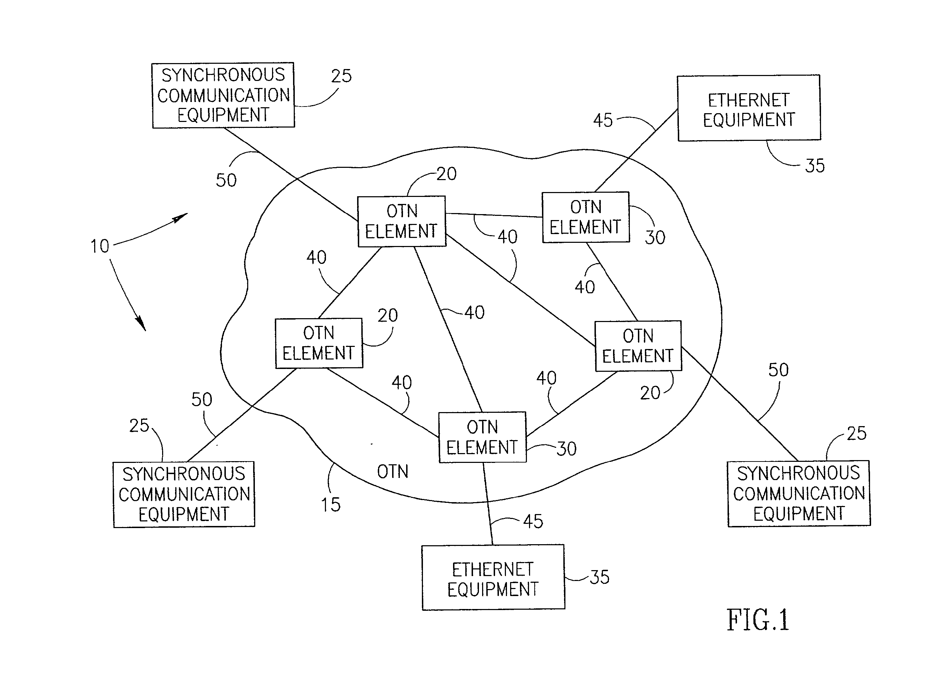

Fig. 1 is a simplified block diagram of an example illustrating a preferred implementation of an optical communication network that employs synchronous communication equipment, where the optical communication network being constructed and operative in accordance with a preferred embodiment of the present invention;

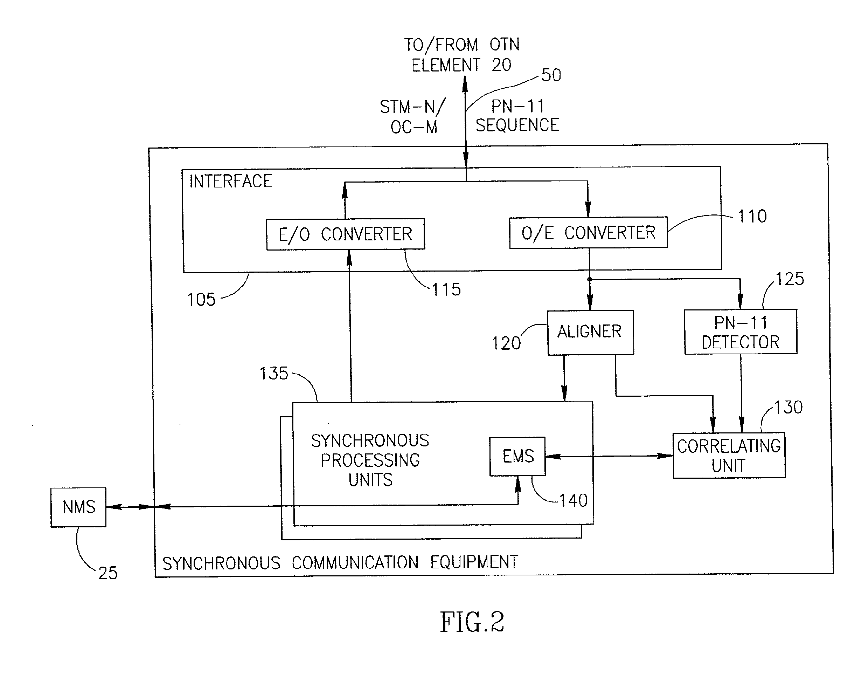

Fig. 2 is a simplified block diagram illustration of a preferred implementation of synchronous communication equipment in the optical communication network of Fig. 1, the synchronous communication equipment being constructed and operative in accordance with a preferred embodiment of the present invention; and

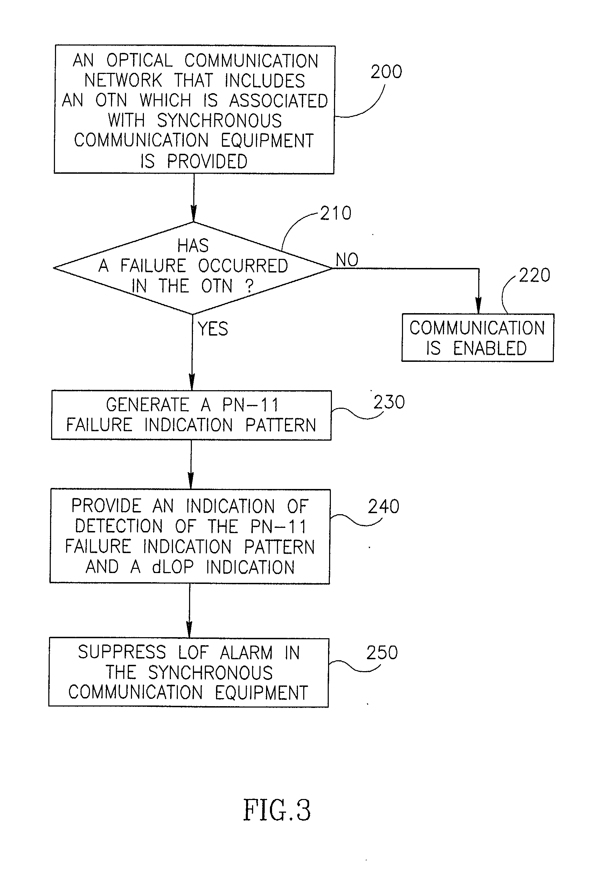

Fig. 3 is a simplified flowchart illustration of a preferred method of operation of the apparatus of Figs. 1 and 2.

### DETAILED DESCRIPTION OF A PREFERRED EMBODIMENT

Reference is now made to Fig. 1 which is a simplified block diagram of an example illustrating a preferred implementation of an optical communication network 10, the optical communication network 10 being constructed and operative in accordance with a preferred embodiment of the present invention.

In this example, the optical communication network 10 includes an optical transport network (OTN) 15 that comprises at least one conventional OTN element 20 which is operatively associated with synchronous communication equipment 25, where the synchronous communication equipment 25 is also comprised in the network 10. The synchronous communication equipment 25 may preferably include communication equipment that is adapted to operate in accordance with at least one of the following technologies: Synchronous Optical Network (SONET); and Synchronous Digital Hierarchy (SDH).

The OTN 15 may also include at least one conventional OTN element 30 that is operatively associated with conventional non-synchronous communication equipment, which, in this example, is conventional Ethernet equipment 35. The non-synchronous communication equipment is included in the network 10. It is appreciated that each OTN element 30 may be different in structure and functionality from each OTN element 20, particularly because mapping of non-synchronous clients into each OTN element 30 is different from mapping of synchronous clients into each OTN element 20.

In a typical configuration, the OTN 15 includes a plurality of OTN elements 20 and a plurality of OTN elements 30. All the OTN elements 20 and 30 may be interconnected in a variety of topologies, such as one of, or a combination of, the following topologies: a mesh topology; a ring topology; and a chain topology. It is appreciated that interconnections between the OTN elements 20 and 30 may preferably be provided via optical fibers 40. Additionally, each OTN element 30 may be connected to Ethernet equipment 35 associated therewith via an optical fiber 45, and each OTN element 20 may be connected to synchronous communication equipment 25 associated therewith via an optical fiber 50.

By way of example and without limiting the generality of the foregoing, the OTN 15 in Fig. 1 includes three OTN elements 20, each being operatively associated with separate similar synchronous communication equipment 25. The OTN 15 further includes two OTN elements 30, each being operatively associated with separate similar conventional Ethernet equipment 35.

Reference is now additionally made to Fig. 2 which is a simplified block diagram illustration of a preferred implementation of the synchronous communication equipment 25 in the optical communication network 10 of Fig. 1, the synchronous communication equipment 25 being constructed and operative in accordance with a preferred embodiment of the present invention.

Typically, the synchronous communication equipment 25 receives information-carrying optical signals from the OTN element 20 associated therewith via the optical fiber 50 that connects the OTN element 20 and the synchronous communication equipment 25. These optical signals are typically communicated over the optical fiber 50 and received at the synchronous communication equipment 25 in a synchronous transport module of order N (STM-N) format if the synchronous communication equipment 25 utilizes SDH technology, or in an optical carrier of level M (OC-M) format if the synchronous communication equipment 25 utilizes SONET technology, where the indexes N and M refer to an order of multiplexing STM-1 signals and OC-3 signals respectively. Typically, N should have one of the values 16, 64 and 256, and M should have one of the values 48, 192 and 768.

In case of a failure in the OTN 15, the synchronous communication equipment 25 preferably receives from the OTN element 20 associated therewith a failure indication pattern in the STM-N/OC-M format via the optical fiber 50. The failure indication pattern is typically generated in a failure indication generator (not shown) in the OTN element 20. The failure indication pattern may preferably include a PN-11 failure indication pattern or sequence characterized by the polynomial of the type 1 + x⁹ +x¹¹ which is transmitted to the synchronous communication equipment 25 according to the recommendation set forth in ITU-T G.709.

The optical fiber 50 is preferably operatively associated with an interface 105 in the synchronous communication equipment 25. The interface 105 preferably includes a conventional optical-to-electronic (O/E) converter 110 that is operative to convert optical signals to electronic signals, and a conventional electronic-to-optical (E/O) converter 115 that is operative to convert electronic signals to optical signals. The O/E converter 110 and the E/O converter 115 may be combined in a single unit.

The information-carrying optical signals or the PN-11 failure indication pattern, if generated, are preferably converted in the O/E converter 110 into electronic digital information signals or an electronic representation of the PN-11 failure indication pattern respectively. The O/E converter 110 is preferably operatively associated with an aligner 120 which is comprised in the synchronous communication equipment 25, and a failure indication detector 125 that is also preferably comprised in the synchronous communication equipment 25. The failure indication detector 125 may alternatively be external to the synchronous communication equipment 25 and operatively associated with the synchronous communication equipment 25.

Preferably, the O/E converter 110 provides the electronic digital information signals or the electronic representation of the PN-11 failure indication pattern to the aligner 120 and to the failure indication detector 125. The aligner 120 is preferably operatively associated with one or more synchronous processing units 135 of the synchronous communication equipment 25 such as, for example, a descrambler (not shown). The electronic digital information signals, if received at the aligner 120, are preferably aligned by the aligner 120 and processed by the synchronous processing units 135 in a manner as is well known in the art.

The failure indication detector 125 is preferably operative to detect the electronic representation of the PN-11 failure indication pattern, if received.

Both the aligner 120 and the failure indication detector 125 are preferably operatively associated with a correlating unit 130 that is preferably comprised in the synchronous communication equipment 25 or alternatively external to the synchronous communication equipment 25 and operatively associated therewith.

When the aligner 120 receives the electronic digital information signals, the aligner 120 is typically able to detect a valid synchronous frame alignment signal (FAS) within a predetermined time period. If the aligner 120 does not detect a valid synchronous FAS within the predetermined time period, the aligner 120 typically declares an incorrect FAS

If a failure occurs in the OTN 15 and the failure indication detector 125 detects the electronic representation of the PN-11 failure indication pattern, the failure indication detector 125 preferably provides an indication of detection of a failure indication pattern to the correlating unit 130. On the other hand, when the aligner 120 receives the electronic representation of the PN-11 failure indication pattern in response to the failure that occurs in the OTN 15, the aligner 120 cannot detect a valid synchronous FAS within a predetermined time period and therefore declares an incorrect synchronous FAS. In response to declaration of the incorrect synchronous FAS, the aligner 120 is preferably operative to generate a Loss-of-Frame defect (dLOF) indication. Preferably, the aligner 120 outputs the dLOF indication to the correlating unit 130.

It is appreciated that the indication of detection of the failure indication pattern may preferably include the failure indication pattern, that is the PN-11 sequence.

Preferably, the correlating unit 130 is operative to suppress a Loss-of-Frame (LOF) alarm in response to reception of the indication of detection of the failure indication pattern from the failure indication detector 125, and reception of the dLOF indication from the aligner 120.

The term "suppress" in all of its grammatical forms is used throughout the specification and claims in conjunction with a LOF alarm to indicate prevention of presentation or display of the LOF alarm to an operator of the network 10 or the synchronous communication equipment 25, or to any other user, although consequent actions which result from existence of the LOF alarm can still be carried out in the synchronous communication equipment 25 and a synchronous sub-network (not shown) that is served by the synchronous communication equipment 25.

In order to suppress the LOF alarm, the correlating unit 130 preferably provides to an element management system (EMS) 140 of the synchronous communication equipment 25 a failure determination indication that is preferably used by the EMS 140 to suppress the LOF alarm in the synchronous communication equipment 25. The EMS 140 is preferably operatively associated with the synchronous communication equipment 25 and comprised in the synchronous communication equipment 25, for example in the synchronous processing units 135. Alternatively, the EMS 140 may be separated from the synchronous communication equipment 25 and operatively associated therewith.

The EMS 140 may be associated with a network management system (NMS) 145 that is typically separated from the synchronous communication equipment 25. The NMS 145 is typically used to manage the network 10 or portions thereof. Preferably, suppression of the LOF alarm prevents presentation or display of the LOF alarm to an operator or user of the NMS 145.

The synchronous communication equipment 25 also typically transmits signals originating from the synchronous sub-network that is served by the synchronous communication equipment 25 to the OTN element 20 associated therewith. The signals originating from the synchronous sub-network are typically processed by the synchronous processing units 135. Outputs of processing of the signals originating from the synchronous sub-network are preferably provided by the synchronous processing units 135 to the E/O converter 115. The E/O converter 115 is preferably operative to convert the outputs of the synchronous processing units 135 to optical signals, and to provide the optical signals to the optical fiber 50 for transmission to the OTN element 20. The OTN element 20 is operative to transmit the optical signals provided by the E/O converter 115 to a destination via another OTN element 20 in the OTN 15 or one of the OTN elements 30 in accordance with a topology utilized in the OTN 15.

The operation of the apparatus of Figs. 1 and 2 is now briefly described. In normal operation conditions, the OTN element 20 and the synchronous communication equipment 25 communicate information in two-way communication.

In a case where a failure occurs in the OTN 15, the failure triggers generation of the PN-11 failure indication pattern in the PN-11 failure indication generator in the OTN element 20. The PN-11 failure indication pattern is then preferably transmitted to the aligner 120 and the PN-11 failure indication detector 125.

In response to reception of the PN-11 failure indication pattern, the aligner 120 preferably outputs to the correlating unit 130 a dLOF indication, and the detector 125 preferably outputs to the correlating unit 130 an indication of detection of the PN-11 failure indication pattern. In response to reception of the PN-11 failure indication pattern and the dLOF indication, the correlating unit 130 preferably outputs to the EMS 140 a failure determination indication. Upon reception of the failure determination indication, the EMS 140 preferably suppresses a LOF alarm in the synchronous communication equipment 25 thereby preventing presentation of the LOF alarm to an operator or user of the synchronous communication equipment 25.

Reference is now made to Fig. 3 which is a simplified flowchart illustration of a preferred method of operation of the apparatus of Figs. 1 and 2.

An optical communication network that includes an optical transport network (OTN) which is associated with synchronous communication equipment is provided (step 200). Communication is enabled as long as a failure in the OTN, or any other failure, does not occur (step 210).

In a case where a failure occurs in the OTN (step 210), a generated failure indication pattern is detected (step 230). Then, an indication of detection of the failure indication pattern and a Loss-of-Frame defect (dLOF) indication are provided (step 240), and in response thereto, LOF alarm in the synchronous communication equipment is suppressed (step 250).

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable sub-combination.

It will be appreciated by persons skilled in the art that the present invention is not limited by what has been particularly shown and described herein above. Rather the scope of the invention is defined by the claims which follow:

## Claims

1. Apparatus for determining occurrence of a failure in an optical transport network (OTN) that is adapted to be associated with synchronous communication equipment, the apparatus comprising:
a failure indication detector operative to detect a failure indication pattern generated in response to a failure occurring in the OTN; and
a correlating unit adapted to be operatively associated with said failure indication detector and said synchronous communication equipment, and adapted to suppress a Loss-of-Frame (LOF) alarm in said synchronous communication equipment in response to receiving an indication that said failure indication pattern has been detected at the failure indication detector and receiving a LOF defect (dLOF) indication from said synchronous communication equipment.

2. Apparatus according to claim 1 and wherein said failure indication detector is comprised in said synchronous communication equipment.

3. Apparatus according to any one of claims 1 or 2, and wherein said synchronous communication equipment comprises an aligner, and said correlating unit receives said dLOF indication from said aligner.

4. Apparatus according to any one of claims 1 to 3, and wherein said aligner is operative to generate said dLOF indication in response to an incorrect synchronous frame alignment signal (FAS).

5. Apparatus according to claim 4 and wherein said incorrect synchronous FAS is declared when the aligner does not detect a valid synchronous FAS within a predetermined time period.

6. Apparatus according to any one of claims 1 to 5, and wherein said correlating unit is operative to provide to an element management system (EMS) associated with the synchronous communication equipment a failure determination indication, said failure determination indication being used by the EMS to suppress the LOF alarm in the synchronous communication equipment.

7. Apparatus according to any one of claims 1 to 6, and wherein said indication of detection of said failure indication pattern comprises the failure indication pattern.

8. Apparatus according to claim 7 and wherein said failure indication pattern comprises a PN-11 sequence.

9. Apparatus according to claim 8 and wherein said PN-11 sequence is **characterized by** a polynomial of the type 1 + x⁹ +x¹¹

10. Synchronous communication equipment comprising:
a failure indication detector operative to detect a failure indication pattern generated in response to a failure occurring in the OTN;
an aligner operative to generate a Loss-of-Frame defect (dLOF) indication in response to said failure occurring in the OTN; and
a correlating unit operatively associated with said failure indication detector and said aligner, and operative to suppress a Loss-of-Frame (LOF) alarm in the synchronous communication equipment in response to receiving an indication that said failure indication pattern has been detected from the failure indication detector and the dLOF indication from the aligner.

11. Synchronous communication equipment according to claim 10 and further comprising an element management system (EMS) operatively associated with the correlating unit and operative to receive from the correlating unit a failure determination indication in response to reception at the correlating unit of said indication of detection of said failure indication pattern and said dLOF indication, and to employ said failure determination indication to suppress the LOF alarm in the synchronous communication equipment.

12. An optical communication network comprising:
an optical transport network (OTN) comprising an OTN element in which a failure indication generator is operative to generate a failure indication pattern in response to a failure occurring in the OTN; and
synchronous communication equipment operatively associated with said OTN element, the synchronous communication equipment comprising:
a failure indication detector operative to detect said failure indication pattern; and
a correlating unit operatively associated with said failure indication detector and operative to suppress a Loss-of-Frame (LOF) alarm in the synchronous communication equipment in response to receiving an indication that said failure indication pattern has been detected from the failure indication detector and a LOF defect (dLOF) indication from said synchronous communication equipment.

13. A method for determining a failure in an optical transport network (OTN) that is associated with synchronous communication equipment, the method comprising:
detecting a failure indication pattern which is generated in response to a failure occurring in the OTN;
providing an indication of detection of said failure indication pattern and a Loss-of-Frame defect (dLOF) indication; and
suppressing a LOF alarm in said synchronous communication equipment in response to said providing.
